# FASCICULE DE BREVET EUROPEEN

(11) **EP 3 875 311 B1**
(45) Date de publication et mention de la délivrance du brevet: **07.06.2023**
(21) Numéro de dépôt: 21159969.1
(22) Date de dépôt: 01.03.2021
(51) Int. Cl.: B60N 2/01, B60N 2/24, B60N 2/30, B60N 3/00, B61D 1/04

(54) **VEHICULE DE TRANSPORT EN COMMUN**
FAHRZEUG FÜR DEN PERSONENNAHVERKEHR
PUBLIC TRANSPORT VEHICLE

(30) Priorité: 03.03.2020 FR 2002151
(43) Date de publication de la demande: 08.09.2021
(73) Titulaire: SpeedInnov, 75008 Paris (FR)
(72) Inventeur: PENNEC, Pierre-Yves, 17000 LA ROCHELLE (FR); DE-COLOMBEL, Bertrand, 75020 PARIS (FR)
(74) Mandataire: Lavoix

(56) Documents cités:
- FR-A1- 2 935 947
- US-A- 6 113 325

## Description

La présente invention concerne un véhicule de transport en commun.

De nombreux véhicules de transport en commun comportent des compartiments internes de transport de passagers prévus pour accueillir les passagers transportés. Ces compartiments comprennent en général un ensemble de sièges disposés dans le sens de la marche, orientés vers l'avant ou vers l'arrière du véhicule et fixés au plancher du compartiment, ces sièges permettant aux passagers de s'asseoir pendant la durée du trajet.

Dans certains cas, des compartiments de transport de passagers comportent également des emplacements dédiés à l'accueil de personnes à mobilité réduite. Ces emplacements comprennent en général une zone dépourvue de siège, de manière à ce qu'un usager en fauteuil roulant puisse se positionner dans un volume qui serait sinon occupé par un ou plusieurs sièges.

Le document US 6 113 325 A présente un véhicule de transport en commun comprenant un compartiment de transport de passagers.

Afin d'optimiser l'occupation du véhicule, notamment lorsqu'aucune personne à mobilité réduite n'est présente dans le véhicule, un ou plusieurs sièges sont fixés à la cloison latérale du compartiment. Ces sièges comportent une assise rabattable qui pivote autour d'un axe parallèle à la direction de déplacement du véhicule et un dossier fixé à la cloison latérale et permettant à un passager de s'asseoir confortablement sur l'assise, le passager faisant alors face à l'autre cloison latérale et tournant le dos à la cloison latérale à laquelle le siège est fixé. Une telle disposition permet au siège à assise mobile de ne pas empiéter, lorsque l'assise est relevée, sur l'emplacement réservé au fauteuil roulant, et donc de maximiser l'espace disponible pour son usager.

Toutefois, il est notable que le positionnement d'un passager valide, lorsqu'il est assis sur l'assise mobile, n'est pas optimisé. En particulier, alors que les autres passagers sont assis dans le sens de la marche ou dos à celui-ci, le passager assis sur l'assise mobile est, lui, tourné de 90 degrés (°) par rapport à ceux-ci, ce qui peut générer un inconfort pour le passager, par exemple lors d'une phase d'accélération ou de décélération du véhicule, puisque l'assise n'empêche pas un mouvement du passager selon la direction longitudinale.

En outre, le passager ne fait face ni aux autres usagers des autres sièges, ni à une éventuelle personne en fauteuil roulant occupant un emplacement voisin, ce qui rend difficile de converser confortablement avec eux puisqu'il faut alors que la personne occupant l'assise mobile se tourne au moins partiellement pour leur faire face.

Il existe donc un besoin pour un véhicule de transport en commun, comportant au moins un emplacement d'accueil d'un fauteuil roulant, qui présente un confort amélioré pour un passager valide occupant cet emplacement.

A cet effet, il est proposé un véhicule de transport en commun conforme à la revendication 1.

Selon des modes de réalisation particuliers, le véhicule présente au moins une des caractéristiques des revendications 2 à 9, prise(s) isolément ou selon toutes les combinaisons techniquement possible(s). Des caractéristiques et avantages de l'invention apparaîtront à la lecture de la description qui va suivre, donnée uniquement à titre d'exemple non limitatif, et faite en référence aux dessins annexés, sur lesquels :
[Fig 1] la figure 1 est une vue partielle en perspective d'un véhicule selon l'invention, comportant un emplacement de réception d'un fauteuil roulant comprenant au moins un siège,
[Fig 2] la figure 2 est une autre vue partielle en perspective du véhicule de la figure 1, et
[Fig 3] la figure 3 est une autre vue en perspective montrant en plus de détails le siège de la figure 1.

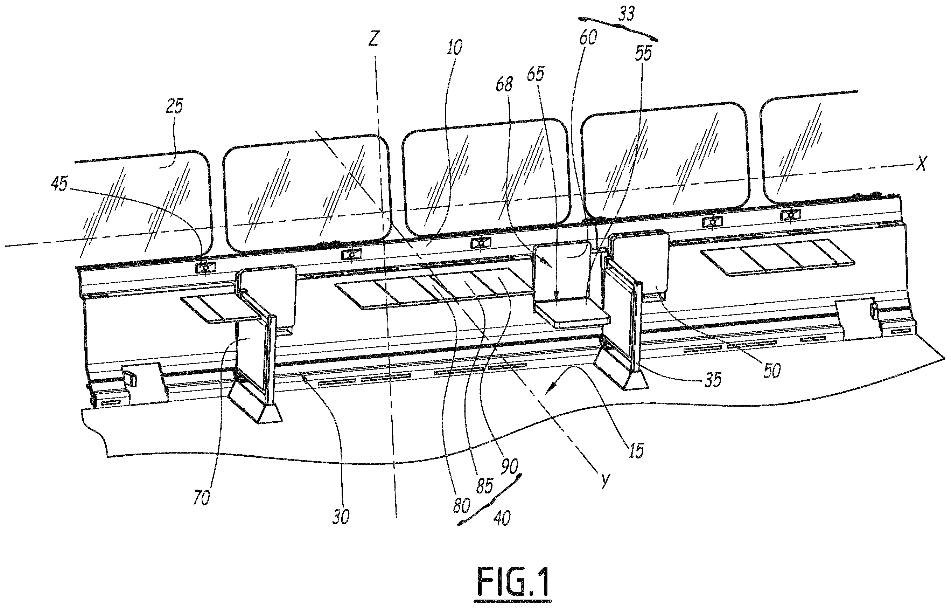

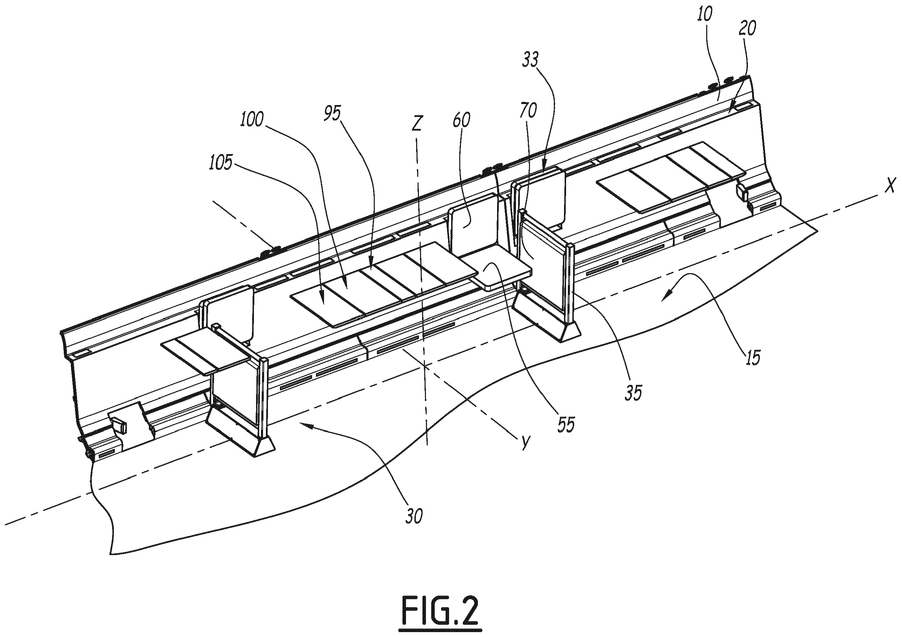

Un véhicule est représenté partiellement sur les figures 1 et 2.

Le véhicule est un véhicule de transport en commun tel qu'un train, un bus, un métro, un tramway ou un avion, ou encore une voiture destinée à former une partie d'un train, d'un tramway ou d'un métro.

Par exemple, le véhicule est une voiture ferroviaire.

Le véhicule s'étend selon une direction longitudinale X. La direction longitudinale est, notamment, la direction selon laquelle le véhicule est prévu pour se déplacer.

Le véhicule comporte au moins deux parois latérales 10 et un plancher 15 délimitant un compartiment 20 de transport de passagers.

Les parois latérales 10 délimitent le compartiment de transport de passagers 20 selon une direction latérale Y. La direction latérale Y est perpendiculaire à la direction longitudinale X et à une direction verticale Z du véhicule.

Chaque paroi latérale 10 comporte, par exemple, au moins une fenêtre 25 configurée pour permettre à un passager du compartiment 20 de regarder à l'extérieur du véhicule.

Une première hauteur est mesurée selon la direction verticale Z entre la fenêtre 25 et le plancher 15.

Le plancher 15 délimite le compartiment de transport de passagers 20 selon la direction verticale Z. En particulier, le plancher 15 est perpendiculaire à la direction verticale Z.

Le compartiment de transport de passagers 20 comporte au moins un emplacement 30 de réception d'un fauteuil roulant, par exemple une pluralité d'emplacements 30, au moins un siège 33, notamment un siège 33 pour chaque emplacement 30, au moins une cloison transversale 35, et optionnellement au moins une table 40.

Comme représenté sur la figure 1, le compartiment 20 comporte par exemple au moins quatre emplacements 30, au moins deux cloisons transversales 35 et au moins trois tables 40.

Chaque emplacement 30 est configuré pour permettre à un usager en fauteuil roulant d'occuper l'emplacement 30 lorsque le véhicule 10 est en fonctionnement. Par exemple, chaque emplacement 30 comporte une portion du plancher 15 prévue pour accueillir le fauteuil roulant.

Chaque emplacement 30 est délimité par au moins une cloison transversale 35 selon la direction longitudinale X. Par exemple, chaque emplacement 30 est délimité selon la direction longitudinale X par une cloison transversale 35 et par une table 40.

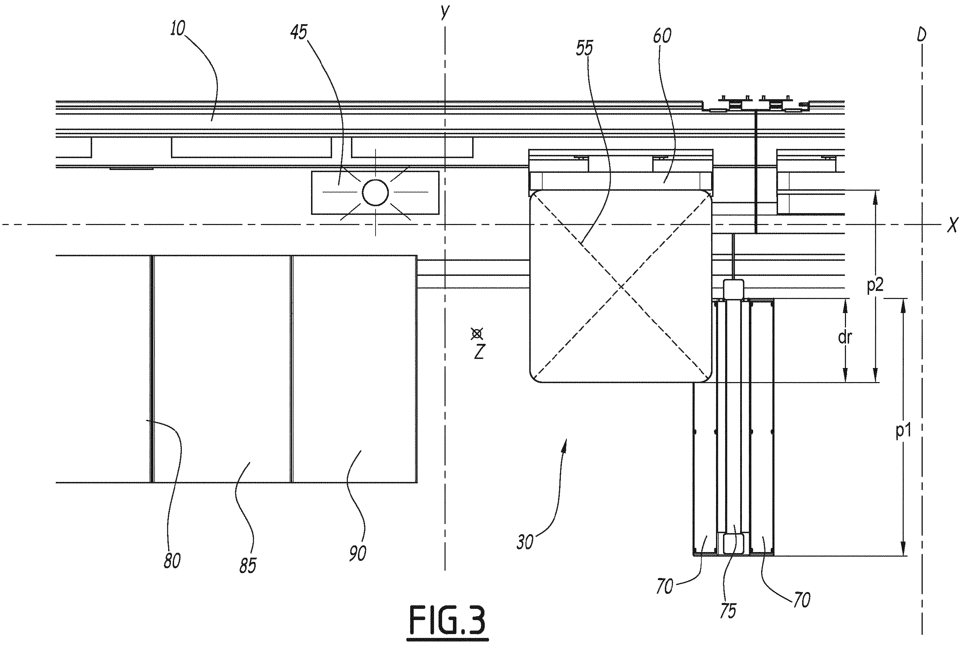

En particulier, comme visible sur les figures 1 à 3, une cloison transversale 35, un emplacement 30, une table 40, un autre emplacement 30 et une autre cloison transversale 35 sont alignés dans cet ordre selon la direction longitudinale X. Optionnellement, un troisième emplacement 30 est présent, l'une des cloisons transversales 35 étant interposée entre ce troisième emplacement 30 et l'un des autres emplacements 30 selon la direction longitudinale X.

Chaque emplacement 30 est délimité selon la direction transversale Y par une paroi latérale 10, par exemple par une paroi latérale 10 et par un couloir s'étendant selon la direction longitudinale X.

Chaque emplacement 30 présente une longueur, mesurée selon la direction longitudinale X, supérieure à 1400 millimètres (mm), de préférence supérieure à 1550 mm.

Chaque emplacement 30 présente une largeur, mesurée selon la direction transversale Y, supérieure à 750 mm, de préférence supérieure à 1 mètre (m).

Chaque emplacement 30 comporte, par exemple, un panneau fonctionnel 45 fixé à la paroi latérale 10 et prévu pour permettre à un usager de commander l'allumage ou l'extinction d'une lampe et/ou pour modifier un flux d'air dirigé vers l'emplacement 30 et/ou pour commander d'autres fonctionnalités liées notamment au confort de l'usager occupant l'emplacement 30.

Chaque compartiment 30 est, par exemple, en regard d'une ou plusieurs fenêtre(s) 25 selon la direction transversale Y.

Chaque siège 33 est accueilli dans un emplacement 30 correspondant.

Chaque siège 33 est configuré pour qu'un usager du véhicule 10 s'assoie sur le siège 33 en l'absence d'un usager en fauteuil roulant occupant l'emplacement 30.

Chaque siège 33 comporte une charnière 50, une assise 55 et, optionnellement, un premier dossier 60.

Le siège 33 est fixé à la paroi latérale 10 qui délimite l'emplacement 30 dans lequel le siège 33 est accueilli, par exemple de manière amovible.

La charnière 50 est solidaire de la paroi latérale 10 qui délimite l'emplacement 30 dans lequel le siège 33 est accueilli. Par exemple, le premier dossier 60 et la charnière 50 sont solidaires de la paroi latérale 10, la charnière 50 étant notamment fixée au premier dossier 60.

La charnière 50 est configurée pour supporter l'assise 50 et pour permettre un mouvement relatif entre l'assise 55 et la paroi latérale 10.

L'assise 55 est mobile en rotation par rapport à la paroi latérale 10 correspondante autour d'un axe parallèle, à 10 degrés (°) près, à la direction longitudinale X.

En particulier, l'assise 55 est mobile entre une position abaissée et une position relevée. Sur les figures 1 et 2, l'assise 55 d'un des sièges 33 est dans la position abaissée, les assises 50 des autres sièges 33 étant dans leurs positions relevées respectives.

Lorsque l'assise 55 est dans la position abaissée, l'assise 55 est configurée pour supporter un passager assis sur l'assise 55. Par exemple, l'assise 55 présente une face supérieure 65 sensiblement horizontale lorsque l'assise 55 est dans la position abaissée.

Il est entendu par « sensiblement horizontale» ou « sensiblement verticale » que la face supérieure 65 forme un angle compris entre 0 ° et 10 ° avec une direction horizontale ou verticale, respectivement.

La face supérieure 65 comporte, par exemple, un coussin ou une couche flexible propre à se déformer sous le poids d'un passager assis, notamment une couche de mousse.

Un tel coussin ou une telle couche flexible permet d'améliorer le confort du passager assis.

Lorsque l'assise 55 est dans la position abaissée, une hauteur mesurée entre la face supérieure 65 et le plancher 15 selon la direction verticale Z est, par exemple, comprise entre 400 millimètres (mm) et 500 mm, notamment égale à 450 mm.

Lorsque l'assise 55 est dans la position relevée, un passager ne peut s'asseoir sur l'assise 55, notamment sur la face supérieure 65. Par exemple, la face supérieure 65 de l'assise 55 est sensiblement verticale lorsque l'assise 55 est dans sa position relevée. Par exemple, la face supérieure 65 de l'assise 55 est perpendiculaire à la direction transversale Y lorsque l'assise 55 est dans la position relevée.

En outre, lorsque l'assise 55 est dans sa position relevée, l'emplacement 30 est propre à accueillir un fauteuil roulant. Par exemple, une épaisseur totale du siège 33, mesurée selon la direction transversale Y lorsque l'assise 55 est dans la position relevée, est inférieure à 400 mm, de préférence à 200 mm.

Le siège 33 est, notamment, configuré pour que, lorsque l'assise 55 est dans la position relevée, une deuxième hauteur mesurée entre le plancher 15 et le point de l'assise le plus éloigné du plancher 15, selon la direction verticale Z, est inférieure ou égale à la première hauteur.

Chaque premier dossier 60 est configuré pour qu'un usager assis sur l'assise 55, lorsque l'assise 55 est dans la position abaissée, appuie son dos contre le premier dossier 60.

En particulier, chaque premier dossier 60 est configuré pour que, lorsqu'un usager appuie son dos contre le premier dossier 60 en étant assis sur l'assise 55, l'usager fait face à la direction transversale Y. En d'autres termes, le dos et la poitrine de l'usager sont perpendiculaires à la direction transversale Y.

Chaque premier dossier 60 est, notamment, intercalé selon la direction transversale Y entre l'assise 55 et la paroi latérale 10 correspondantes.

Chaque premier dossier 60 présente une face d'appui 68 destinée à permettre à l'usager d'appuyer son dos contre la face d'appui 68.

La face d'appui 68 est perpendiculaire à la direction transversale Y.

La face d'appui 68 comporte, par exemple, un coussin ou une couche flexible propre à se déformer lors de l'appui, notamment une couche de mousse.

Le siège 33 est, par exemple, configuré pour que, lorsque l'assise 55 est dans la position relevée, la face supérieure 65 est en appui contre la face d'appui 68. Par exemple, la face supérieure 65 et la face d'appui 68 sont superposées selon la direction transversale Y lorsque l'assise est dans la position relevée.

Chaque cloison transversale 35 est configurée pour délimiter au moins un emplacement 30 selon la direction longitudinale X, par exemple pour délimiter selon la direction longitudinale X deux emplacements 30 entre lesquels la cloison transversale 35 est interposée.

Chaque cloison transversale 35 est, notamment, configurée pour empêcher une mouvement involontaire d'un fauteuil roulant accueilli dans l'emplacement 35, par exemple en cas de freinage, par appui du fauteuil contre la cloison transversale 35.

Chaque cloison transversale 35 présente une troisième hauteur, mesurée entre le plancher et le point de la cloison transversale 35 le plus éloigné du plancher. La troisième hauteur est, par exemple, comprise entre 500 mm et 1200 mm, de préférence entre 600 mm et 900 mm.

Chaque cloison transversale 35 présente une longueur, mesurée selon la direction transversale Y, comprise entre 600 mm et 1000 mm.

Chaque cloison transversale 35 comporte au moins un deuxième dossier 70, par exemple deux deuxièmes dossiers 70, et un support 75 supportant le ou les deuxième(s) dossier (s) 70, ce support 75 étant notamment métallique. Par exemple, le support 75 présente deux faces perpendiculaires chacune à la direction longitudinale X, chaque deuxième dossier 70 étant fixé à l'une des deux faces du support 75. Chaque face du support 75 à laquelle un deuxième dossier 70 est fixé est en regard d'un emplacement 30 correspondant.

Chaque deuxième dossier 70 est configuré pour permettre à un passager assis sur l'assise 55 du siège 33 de l'un des emplacements 30 délimités par la cloison transversale 35 d'appuyer son dos contre le deuxième dossier 70.

En particulier, chaque deuxième dossier 70 délimite l'un des emplacements 30 selon la direction longitudinale X et est configuré pour permettre à un passager assis sur l'assise 55 du siège 33 de l'emplacement 30 considéré d'appuyer son dos contre le deuxième dossier 70.

Une distance de recouvrement dr est définie pour chaque deuxième dossier 70. La distance de recouvrement dr est la distance de recouvrement entre une projection p1 du deuxième dossier 70 sur une droite D parallèle à la direction transversale Y et une projection p2, sur la même droite D, de l'assise 55 du siège 33 accueilli dans l'emplacement 30 délimité par le deuxième dossier 70 considéré.

Chaque projection p1, p2 est une projection orthogonale selon la direction longitudinale X. En d'autres termes, chaque projection p1, p2 est obtenu par une première projection orthogonale sur un plan comportant une droite parallèle à la direction transversale Y et une droite parallèle à la direction verticale Z, résultant en un premier segment, puis par une deuxième projection sur la droite D du premier segment pour obtenir un deuxième segment.

Chaque projection p1, p2 est définie comme étant le segment de la droite D résultant d'une opération de projection orthogonale du deuxième dossier 70 ou de l'assise 55, respectivement, sur la droite D.

En d'autres termes, la distance de recouvrement dr est la longueur d'un segment de la droite D, ce segment étant défini comme étant la portion de la droite D qui est commune aux deux segments résultant des opérations de projection respectivement du deuxième dossier 70 et de l'assise 55.

La distance de recouvrement dr est supérieure ou égale à 100 mm, notamment supérieure ou égale à 200 mm, en particulier supérieure ou égale à 300 mm.

Chaque deuxième dossier 70 comporte, par exemple, un coussin ou une couche flexible propre à se déformer lors de l'appui, notamment une couche de mousse.

Le support 75 est configuré pour supporter chaque dossier 70. Le support 75 est, par exemple, réalisé en un matériau métallique.

Le support 75 comporte, par exemple, un cadre ou une plaque sensiblement rectangulaire, à laquelle chaque dossier 70 est fixé. Optionnellement, le support 75 comporte une barre supérieure s'étendant selon la direction transversale Y et préhensible par un usager. Cette barre permet alors à l'usager de se tenir à la cloison transversale 35 en cas de mouvement du véhicule.

Le support 75 est fixé au plancher 35, par exemple par une base de laquelle le cadre ou la plaque est solidaire.

Chaque table 40 est prévue pour être utilisée par un passager en fauteuil roulant accueilli dans un emplacement 30 délimité par la table 40 selon la direction longitudinale X. Par exemple, chaque table 40 est interposée entre deux emplacements 30 et configurée pour être utilisée par un passager en fauteuil roulant accueilli dans chacun des deux emplacements 30.

Chaque table 40 est, en outre, prévue pour être utilisée par un passager assis sur l'assise 55 d'un siège 33 accueilli dans au moins un des emplacements 30 délimités par la table 40.

Une distance, mesurée selon la direction longitudinale X, entre un centre C de l'assise 55 et la table 40, est comprise par exemple entre 450 mm et 550 mm.

Le centre C de l'assise 55 est, notamment, le point en lesquelles les diagonales de l'assise 55 s'intersectent mutuellement lorsque l'assise 55 est parallélépipédique. La distance est mesurée entre le centre C de l'assise 55 et le point de la table 40 le plus près de l'assise 55 selon la direction longitudinale X.

Une distance, mesurée selon la direction longitudinale X, entre l'assise 55 et le point de la table 40 le plus proche de l'assise 55, est comprise par exemple entre 200 mm et 300 mm, notamment égale à 230 mm.

La table 40 comporte, par exemple, un unique plateau, notamment réalisé d'une seule pièce, prévu pour permettre à chaque usager du ou des emplacements 30 correspondants de déposer des objets sur le plateau.

En variante, comme décrit ci-dessous, le plateau est formé de plusieurs pièces mobiles.

Chaque table 40 comporte, par exemple, une tablette 80, au moins un premier volet 85 et, optionnellement, au moins un deuxième volet 90.

La tablette 80 est fixe par rapport à chaque paroi latérale 10. Par exemple, la tablette 80 est fixée à la paroi latérale 10 qui délimite selon la direction transversale Y le ou les emplacement(s) 30 qui est(sont) délimité(s) par la tablette 80.

La tablette 80 est sensiblement horizontale. En particulier, la tablette 80 est configurée pour permettre à un usager de poser des objets sur la tablette 80.

La tablette 80 présente une face supérieure 95 délimitant la tablette 80 selon la direction verticale Z et deux faces d'extrémité délimitant la tablette 80 selon la direction longitudinale X.

La face supérieure 95 de la tablette 80 est, par exemple, rectangulaire.

Chaque face d'extrémité de la tablette 80 est, par exemple, perpendiculaire à la direction longitudinale X.

Chaque premier volet 85 est monté mobile en rotation sur la tablette 80. Par exemple, chaque premier volet 85 est configuré pour pivoter par rapport à la tablette 80 autour d'un axe parallèle à la direction transversale Y entre une première position et une deuxième position.

Lorsque chaque premier volet 85 est dans sa première position, comme représenté sur les figures, la tablette 80 est interposée selon la direction longitudinale X entre les deux premiers volets 85.

Chaque premier volet 85 présente une face supérieure 100 délimitant le premier volet selon la direction verticale Z lorsque le premier volet 85 est dans la première position.

En outre, chaque premier volet 85 présente deux faces latérales délimitant le premier volet 85 selon la direction longitudinale X lorsque le premier volet 85 est dans la première position. En particulier, lorsque le premier volet 85 dans la première position, l'une des deux faces latérales du premier volet 85 est en appui contre l'une des faces d'extrémité de la tablette 80.

Lorsque le premier volet 85 est dans la première position, la face supérieure 100 du premier volet 85 est perpendiculaire à la direction verticale X. Par exemple, la face supérieure 100 du premier volet 85 est de niveau avec la face supérieure 95 de la tablette 80.

Il est entendu par « de niveau » (synonyme du terme Anglais « flush ») qu'une différence de hauteur, mesurée selon la direction verticale Z à partir du plancher 15, entre les faces supérieures 95, 100 du premier volet 85 et de la tablette 80, est intérieure ou égale à 5 mm, par exemple inférieure ou égale à 2 mm, en particulier égale à zéro. Par exemple, les faces supérieures 95, 100 du premier volet 85 et de la tablette 80 sont coplanaires.

Lorsque le premier volet 85 est dans la deuxième position, la face latérale du premier volet 85 n'est pas en appui contre la face d'extrémité correspondante de la tablette 80. Par exemple, la face supérieure 100 du premier volet 85 est verticale.

Chaque deuxième volet 90 est monté mobile en rotation autour d'un axe parallèle à la direction transversale Y par rapport à un premier volet 90 correspondant.

En particulier, chaque deuxième volet 90 est mobile par rapport au premier volet 85 entre une troisième position et une quatrième position.

Chaque deuxième volet 90 présente une face supérieure 105 et deux faces latérales.

Lorsque le deuxième volet 90 est dans la troisième position, l'une des faces latérales du deuxième volet 90 est en appui contre celle des faces latérales du premier volet 85 correspondant qui n'est pas en appui contre une face de la tablette. En outre, la face supérieure 105 du deuxième volet 90 est de niveau avec la face supérieure 100 du premier volet 85.

Ainsi, lorsque chaque premier volet 85 est dans sa première position et chaque deuxième volet 90 est dans la troisième position, comme représenté sur les figures, chaque premier volet 85 est interposé selon la direction longitudinale X entre un deuxième volet 90 et la tablette 80.

Lorsque le deuxième volet 90 est dans la quatrième position, la face supérieure 105 du deuxième volet 90 est en appui contre la face supérieure 100 du premier volet 85 correspondant.

Grâce à l'invention, un passager peut s'assoir confortablement sur l'assise 55 (de par la présente du deuxième dossier 70) tout en étant orienté dans le sens de la marche ou contrairement au sens de la marche. En particulier, l'usager peut converser confortablement avec un passager présent dans un emplacement 30 (ou sur un siège classique) décalé selon la direction longitudinale X.

Une distance de recouvrement dr supérieure ou égale à 300 mm permet notamment un niveau de confort suffisant.

Lorsque la première hauteur est inférieure ou égale à la deuxième hauteur, le siège 33 ne gêne pas la vision des usagers à travers les fenêtres 25.

Deux emplacements 30 séparés par une table 40 permettent une occupation efficace de l'espace disponible dans le véhicule, notamment par une mutualisation au moins partielle de la table 40.

Lorsqu'une distance entre le centre C de l'assise 55 et la table est comprise entre 450 mm et 550 mm, un usager assis sur l'assise peut utiliser confortablement la table 40.

L'utilisation des premiers et deuxièmes volets 85 et 90 permet notamment d'adapter la table 40 à différentes configurations d'utilisation, en particulier selon qu'un usager est assis sur l'assise 55 ou qu'un passager en fauteuil roulant occupe l'emplacement 30. En effet, un passager en fauteuil roulant est plus éloigné de la cloison transversale 35, et donc plus proche de la tablette 40, qu'un usager assis sur l'assise 55.

En outre, les fauteuils roulants électriques occupent plus de place que les fauteuils roulants classiques. Ainsi, un usager en fauteuil roulant classique utilisera la table confortablement lorsque le premier volet 85 est dans la première position et le deuxième volet 90 dans la troisième position (c'est-à-dire quand la table 40 est entièrement dépliée et que le volet 90 est le plus proche de la cloison 35), quand un usager en fauteuil roulant électrique préfèrera le deuxième volet 90 dans la quatrième position (i.e. replié contre le premier volet 85, formant une table 40 de plus petite dimensions et plus adaptée aux dimensions de son fauteuil).

Lorsque le siège 33 comporte un premier dossier 60, le siège 33 peut également être utilisé à d'autres endroits et dans d'autres orientations dans le véhicule. Par exemple, un même siège peut servir soit de siège 33 dans un emplacement 30 soit de siège pour le conducteur du véhicule. La conception et la fabrication du véhicule sont donc facilités.

Lorsqu'une cloison 35 séparant deux emplacements 30 mesure moins de 850 mm de haut, deux personnes occupant ces deux emplacements peuvent converser de manière confortable, notamment lorsqu'elles sont chacune assise sur un siège 33, le dos appuyé contre le premier dossier 60 correspondant.

## Revendications

1. Véhicule de transport en commun s'étendant selon une direction longitudinale (X) et comportant deux parois latérales (10) délimitant un compartiment interne de transport de passagers selon une direction transversale (Y) du véhicule, le compartiment interne comportant au moins un emplacement (30) de réception d'un fauteuil roulant et une cloison transversale (35) délimitant l'emplacement (30) selon la direction longitudinale, au moins un siège (33) étant accueilli dans chaque emplacement (30), le siège (33) comportant une assise (55) mobile en rotation autour d'un axe parallèle à la direction longitudinale (X) entre une position abaissée et une position relevée, l'assise (55) étant configurée pour supporter un passager assis lorsque l'assise (55) est dans la position abaissée,
le véhicule étant **caractérisé en ce que** la cloison transversale (35) comporte un premier dossier (70) configuré pour permettre à un passager d'appuyer son dos contre le premier dossier (70) lorsque le passager est assis sur l'assise (55).

2. Véhicule selon la revendication 1, dans lequel une distance de recouvrement (dr) entre une projection orthogonale (P1) du premier dossier (70) sur une droite (D) parallèle à la direction transversale (Y) et une projection orthogonale (P2) de l'assise (55) sur ladite droite (D) lorsqu'elle est en position abaissée est définie, la distance de recouvrement (dr) étant supérieure ou égale à 300 millimètres.

3. Véhicule selon la revendication 1 ou 2, dans lequel l'assise (55) est supportée par une charnière (50) fixée à une des parois latérales (10) comportant une fenêtre (25), une première hauteur étant mesurée selon une direction verticale (Z) entre un plancher (15) du compartiment et la fenêtre (25), l'assise (55) étant configurée pour que, lorsque l'assise (55) est dans la position relevée, une deuxième hauteur mesurée selon la direction verticale (Z) entre le plancher (15) et le point de l'assise (55) le plus éloigné du plancher (15) est inférieure ou égale à la première hauteur.

4. Véhicule selon l'une quelconque des revendications 1 à 3, comportant au moins deux emplacements (30) de réception d'un fauteuil roulant, les deux emplacements (30) étant séparés selon la direction longitudinale (X) par une table (40) configurée pour être utilisée par un passager présent dans l'un des deux emplacements (30), une distance mesurée selon la direction longitudinale (X) entre un centre (C) de l'assise (55) et la table (40) étant notamment comprise entre 450 millimètres et 550 millimètres lorsque l'assise (55) est dans la position abaissée.

5. Véhicule selon la revendication 4, dans lequel la table comporte une tablette (80) horizontale présentant au moins une face d'extrémité délimitant la tablette (80) selon la direction longitudinale (X), la table (40) comportant en outre au moins un premier volet (85) mobile en rotation autour d'un axe parallèle à la direction transversale (Y) par rapport à la tablette (80) entre une première position dans laquelle une face supérieure (100) du premier volet (85) est de niveau avec une face supérieure de la tablette (80), une face latérale du premier volet (85) étant en appui contre la face d'extrémité, et une deuxième position dans laquelle la face supérieure (100) du premier volet (85) est perpendiculaire à la direction longitudinale (X).

6. Véhicule selon la revendication 5, dans lequel la table (40) comporte en outre au moins un deuxième volet (90) monté mobile en rotation sur le premier volet (85), le deuxième volet (90) étant mobile entre une troisième position dans laquelle le premier volet (85) est interposé, selon la direction longitudinale (X), entre le deuxième volet (90) et la tablette (80), et une quatrième position dans laquelle une face supérieure (105) du deuxième volet (90) est en appui contre la face supérieure (100) du premier volet (85), les faces supérieures (100, 105) du premier (85) et du deuxième volet (90) étant de niveau l'une avec l'autre lorsque le deuxième volet (90) est dans la troisième position et que le premier volet (85) est dans la première position.

7. Véhicule selon l'une quelconque des revendications précédentes, comportant en outre un deuxième dossier (60) configuré pour permettre à un passager assis sur l'assise (55) d'appuyer son dos contre le deuxième dossier (60) lorsque le passager est assis sur l'assise (55), le deuxième dossier (60) étant interposé selon la direction transversale (Y) entre l'assise (55) et l'une des parois latérales (10), le deuxième dossier (60) étant notamment fixé à une des parois latérales (10).

8. Véhicule selon la revendication 7, dans lequel l'assise (55) est supportée par une charnière (50) fixée au deuxième dossier (60).

9. Véhicule selon l'une quelconque des revendications précédentes, comportant au moins deux emplacements (30) de réception d'un fauteuil roulant, les deux emplacements (30) étant séparés selon la direction longitudinale (X) par la cloison transversale (35), une hauteur de la cloison transversale (35) étant comprise entre 500 millimètres et 1200 millimètres, de préférence entre 600 millimètres et 900 millimètres.

## Patentansprüche

1. Öffentliches Transportfahrzeug, das sich in einer Längsrichtung (X) erstreckt und zwei Seitenwände (10) aufweist, die ein inneres Fahrgasttransportabteil in einer Querrichtung (Y) des Fahrzeugs begrenzen, das innere Abteil umfassend mindestens eine Stellfläche (30) zum Aufnehmen eines Rollstuhls und eine Quertrennwand (35), die die Stellfläche (30) in der Längsrichtung begrenzt, wobei mindestens ein Sitz (33) auf jeder Stellfläche (30) aufgenommen ist, der Sitz (33) umfassend eine Sitzfläche (55), die um eine Achse parallel zu der Längsrichtung (X) zwischen einer abgesenkten Position und einer angehobenen Position drehbar ist, wobei die Sitzfläche (55) konfiguriert ist, um einen sitzenden Passagier zu tragen, wenn die Sitzfläche (55) in der abgesenkten Position ist,
wobei das Fahrzeug **dadurch gekennzeichnet ist, dass** die Quertrennwand (35) eine erste Rückenlehne (70) umfasst, die konfiguriert ist, um einem Fahrgast zu ermöglichen, seinen Rücken gegen die erste Rückenlehne (70) zu lehnen, wenn der Fahrgast auf der Sitzfläche (55) sitzt.

2. Fahrzeug nach Anspruch 1, wobei ein Überlappungsabstand (dr) zwischen einer orthogonalen Projektion (P1) der ersten Rückenlehne (70) auf einer Gerade (D) parallel zu der Querrichtung (Y) und einer orthogonalen Projektion (P2) der Sitzfläche (55) auf der Geraden (D), wenn sie in der abgesenkten Position ist, definiert ist, wobei der Überlappungsabstand (dr) größer als oder gleich wie 300 Millimeter ist.

3. Fahrzeug nach Anspruch 1 oder 2, wobei die Sitzfläche (55) von einem Scharnier (50) getragen wird, das an einer der Seitenwände (10) umfassend Fenster (25) befestigt ist, wobei eine erste Höhe in einer vertikalen Richtung (Z) zwischen einem Boden (15) des Abteils und dem Fenster (25) gemessen wird, wobei die Sitzfläche (55) konfiguriert ist, sodass, wenn die Sitzfläche (55) in der angehobenen Position ist, eine zweite Höhe, gemessen entlang der vertikalen Richtung (Z) zwischen dem Boden (15) und dem Punkt der Sitzfläche (55), der am weitesten von dem Boden (15) entfernt ist, kleiner als oder gleich wie die erste Höhe ist.

4. Fahrzeug nach einem der Ansprüche 1 bis 3, umfassend mindestens zwei Stellflächen (30) zum Aufnehmen eines Rollstuhls, wobei die zwei Stellflächen (30) in Längsrichtung (X) durch einen Tisch (40) getrennt sind, der konfiguriert ist, um von einem Fahrgast verwendet zu werden, der auf einer der zwei Stellflächen (30) anwesend ist, wobei ein in der Längsrichtung (X) gemessener Abstand zwischen einem Mittelpunkt (C) der Sitzfläche (55) und dem Tisch (40) insbesondere zwischen 450 Millimetern und 550 Millimetern ist, wenn die Sitzfläche (55) in der abgesenkten Position ist.

5. Fahrzeug nach Anspruch 4, wobei der Tisch eine horizontale Ablage (80) umfasst, die mindestens eine Stirnseite aufweist, die die Ablage (80) in Längsrichtung (X) begrenzt, der Tisch (40) ferner umfassend mindestens eine erste Klappe (85), die um eine Achse parallel zu der Querrichtung (Y) in Bezug auf die Ablage (80) zwischen einer ersten Position, in der eine Oberseite (100) der ersten Klappe (85) mit einer Oberseite der Ablage (80) bündig ist, wobei eine laterale Seite der ersten Klappe (85) an der Stirnseite anliegt, und einer zweiten Position, in der die Oberseite (100) der ersten Klappe (85) senkrecht zu der Längsrichtung (X) ist, drehbar beweglich ist.

6. Fahrzeug nach Anspruch 5, wobei der Tisch (40) ferner mindestens eine zweite Klappe (90) umfasst, die drehbar beweglich auf der ersten Klappe (85) montiert ist, wobei die zweite Klappe (90) zwischen einer dritten Position, in der die erste Klappe (85) in Längsrichtung (X) zwischen der zweiten Klappe (90) und der Ablage (80) angeordnet ist, und einer vierten Position, in der eine Oberseite (105) der zweiten Klappe (90) an der Oberseite (100) der ersten Klappe (85) anliegt, beweglich ist, wobei die Oberseiten (100, 105) der ersten (85) und der zweiten (90) Klappe miteinander bündig sind, wenn die zweite Klappe (90) in der dritten Position und die erste Klappe (85) in der ersten Position ist.

7. Fahrzeug nach einem der vorherigen Ansprüche, ferner umfassend eine zweite Rückenlehne (60), die konfiguriert ist, um einem auf der Sitzfläche (55) sitzenden Fahrgast zu ermöglichen, seinen Rücken gegen die zweite Rückenlehne (60) zu lehnen, wenn der Fahrgast auf der Sitzfläche (55) sitzt, wobei die zweite Rückenlehne (60) in Querrichtung (Y) zwischen der Sitzfläche (55) und einer der Seitenwände (10) eingefügt ist, wobei die zweite Rückenlehne (60) insbesondere an einer der Seitenwände (10) befestigt ist.

8. Fahrzeug nach Anspruch 7, wobei die Sitzfläche (55) von einem Scharnier (50) getragen wird, das an der zweiten Rückenlehne (60) befestigt ist.

9. Fahrzeug nach einem der vorhergehenden Ansprüche, umfassend mindestens zwei Stellflächen (30) zum Aufnehmen eines Rollstuhls, wobei die zwei Stellflächen (30) durch eine Querwand in Längsrichtung (X) durch die Quertrennwand (35) getrennt sind, wobei eine Höhe der Quertrennwand (35) zwischen 500 Millimetern und 1200 Millimetern, vorzugsweise zwischen 600 Millimetern und 900 Millimetern, liegt.

## Claims

1. Public transport vehicle extending in a longitudinal direction (X) and comprising two side walls (10) delimiting an internal passenger transport compartment in a transverse direction (Y) of the vehicle, the internal compartment comprising at least one location (30) for receiving a wheelchair and a transverse partition (35) delimiting the location (30) in the longitudinal direction, at least one seat (33) being accommodated in each location (30), the seat (33) comprising a seat (55) that can be rotated about an axis parallel to the longitudinal direction (X) between a lowered position and a raised position, the seat (55) being configured to support a seated passenger when the seat (55) is in the lowered position,
the vehicle being **characterised in that** the transverse bulkhead (35) has a first backrest (70) configured to allow a passenger to rest their back against the first backrest (70) when the passenger is seated on the seat (55).

2. Vehicle according to claim 1, in which an overlap distance (dr) between an orthogonal projection (P1) of the first backrest (70) on a line (D) parallel to the transverse direction (Y) and an orthogonal projection (P2) of the seat (55) on the said line (D) when in the lowered position is defined, the overlap distance (dr) being greater than or equal to 300 millimetres.

3. Vehicle according to claim 1 or 2, wherein the seat (55) is supported by a hinge (50) attached to one of the side walls (10) having a window (25), a first height being measured along a vertical direction (Z) between a floor (15) of the compartment and the window (25), the seat (55) being configured so that, when the seat (55) is in the raised position, a second height measured in the vertical direction (Z) between the floor (15) and the point of the seat (55) furthest from the floor (15) is less than or equal to the first height.

4. Vehicle according to any one of claims 1 to 3, comprising at least two places (30) for receiving a wheelchair, the two places (30) being separated in the longitudinal direction (X) by a table (40) configured for use by a passenger present in one of the two places (30), a distance measured in the longitudinal direction (X) between a centre (C) of the seat (55) and the table (40) being in particular between 450 millimetres and 550 millimetres when the seat (55) is in the lowered position.

5. Vehicle according to claim 4, in which the table comprises a horizontal shelf (80) with at least one end face delimiting the shelf (80) in the longitudinal direction (X), the table (40) also comprising at least one first flap (85) that can rotate about an axis parallel to the transverse direction (Y) with respect to the shelf (80) between a first position in which an upper face (100) of the first flap (85) is level with an upper face of the shelf (80), a side face of the first flap (85) bearing against the end face, and a second position in which the upper face (100) of the first flap (85) is perpendicular to the longitudinal direction (X).

6. Vehicle according to claim 5, wherein the table (40) further comprises at least one second flap (90) rotatably mounted on the first flap (85), the second flap (90) being movable between a third position in which the first flap (85) is interposed, in the longitudinal direction (X), between the second flap (90) and the shelf (80), and a fourth position in which an upper face (105) of the second flap (90) rests against the upper face (100) of the first flap (85), the upper faces (100, 105) of the first (85) and second (90) flaps being level with one another when the second flap (90) is in the third position and the first flap (85) is in the first position.

7. Vehicle according to any of the preceding claims, further comprising a second backrest (60) configured to allow a passenger seated on the seat (55) to rest his or her back against the second backrest (60) when the passenger is seated on the seat (55), the second backrest (60) being interposed in the transverse direction (Y) between the seat (55) and one of the side walls (10), the second backrest (60) being fixed to one of the side walls (10) in particular.

8. Vehicle of claim 7, wherein the seat (55) is supported by a hinge (50) attached to the second backrest (60).

9. Vehicle according to any of the preceding claims, comprising at least two places (30) for receiving a wheelchair, the two places (30) being separated in the longitudinal direction (X) by the transverse partition (35), a height of the transverse partition (35) being between 500 millimetres and 1,200 millimetres, preferably between 600 millimetres and 900 millimetres.
